# EUROPEAN PATENT APPLICATION

(11) **EP 1 569 420 A2**
(43) Date of publication of application: **31.08.2005**
(21) Application number: 05003072.5
(22) Date of filing: 14.02.2005
(51) Int. Cl.: H04M 1/02, G06F 3/02, H04M 1/03

(54) **Hinge for split keyboards of a portable communication and gaming device**

(30) Priority: 25.02.2004 KR 2004012564; 08.07.2004 KR 2004052995
(71) Applicant: SAMSUNG ELECTRONICS CO., LTD., Gyeonggi-do (KR)
(72) Inventor: Cho, Bong-Hee, Yeongtong-gu Suwon-si Gyeonggi-do (KR); Lee, Sung-Young, Yeongtong-gu Suwon-si Gyeonggi-do (KR); Kim, Tae-Yun, Yeongtong-gu Suwon-si Gyeonggi-do (KR); Bae, Jong-Gun, Yeongtong-gu Suwon-si Gyeonggi-do (KR)
(74) Representative: Lang, Johannes

(57) **Abstract**

A portable communication device for games is disclosed. The portable communication device comprises a body housing (10) having a display unit, a first key swing housing (20) connected to the body housing (10) such that the first key swing housing (20) can be rotated about a first hinge axis (A1) while being opposite to the body housing for exposing/covering one side display section (114) of the display unit, and a second key swing housing (30) connected to the body housing (10) such that the second key swing housing can be rotated about a second hinge axis (A2) while being opposite to the body housing for exposing/covering the other side display section (110) of the display unit. The first and second key swing housings are rotatably connected to the body housing by means of a hinge apparatus (401).

## Description

### BACKGROUND OF THE INVENTION

### Field of the Invention

The present invention relates to portable communication devices including cellular phones, personal digital assistants, hand held personal computers, digital communication devices, and portable game devices. More particularly, the present invention relates to a portable swing-type communication device on which it is convenient to play games.

### Description of the Related Art

"Portable communication devices" typically refers to electronic devices that are portable and enable owners of the devices to communicate through wireless communication. Such portable communication devices have become increasingly small, slim, and lightweight, whereby portability thereof is improved. Furthermore, such portable communication devices are capable of multimedia transmission, whereby the devices have various additional functions. Future portable communication devices will become even smaller , lightweight, multipurpose devices with various functions, which will be easily adapted to various multimedia and Internet environments. The portable communication devices are electronic devices commonly used by people of all ages and gender all over the world, and are considered indispensable.

On the basis of their forms, the portable communication devices may be classified into several types of communication devices. For example, the portable communication devices may be classified as a bar-type communication device, a flip-type communication device, and a folder-type communication device. The bar-type communication device comprises a bar-type single housing, the flip-type communication device comprises a bar-type housing and a flip part pivotably attached to the housing, and the folder-type communication device comprises a bar-type housing and a folder part pivotably attached to the housing.

On the basis of where or how they are worn, the portable communication devices may also be classified as a necklace-type communication device and a wrist-type communication device. The necklace-type communication device is worn on the neck of a user by means of a string, and the wrist-type communication device is worn on the wrist of the user.

On the basis of how they are opened or closed, the portable communication devices may also be classified as a rotating-type communication device and a sliding-type communication device. The rotating-type communication device is characterized in that two housings are rotatably connected to each other while the housings are continuously opposite each other. The rotating-type communication device is opened or closed by rotation of the two housings in such a manner that the housings are rotated apart from or toward each other. On the other hand, the sliding-type communication device is characterized in that two housings slide in the longitudinal direction. The sliding-type communication device is opened or closed by a sliding movement of the two housings in such a manner that the housings are slid apart from or toward each other. The above-mentioned various types of communication devices will be easily appreciated by a person having an ordinary skill in the art to which the present invention pertains.

On the basis of their functions, the portable communication devices may be classified into several types of communication devices. For example, the portable communication devices may be further classified into a communication device having a game function, a communication device having an Internet function, a communication device having a text transmission function, a communication device having a TV function, and a communication device having a health-checking function. Especially; various games are downloaded to a portable communication terminal through wireless Internet such that a user of the portable communication terminal can play games anytime and anywhere, which is an increasing trend.

The portable communication devices have also been adapted to transmit/receive data at high speeds in addition to having an audio communication function. The portable communication devices use wireless communication technology for transmitting data at high speeds, which will satisfy the increasing needs of the consuming public.

Another popular trend provides a camera lens in each portable communication device for transmitting image signals. The portable communication device has a camera lens module mounted outside or inside a main body of the portable communication device so that a user of the device can talk with another user of a similar device while looking at each other, or take pictures of his/her desired subjects.

However, the conventional portable communication device having a game function has a problem in that, although it can be conveniently used in a phone mode, it does not allow a convenient key-pushing operation in a game mode. An accurate, rapid and convenient key-pushing operation is necessary when the portable communication device is in the game mode, which is not satisfied by conventional portable communication devices having a game function.

### SUMMARY OF THE INVENTION

Therefore, the present invention has been made in view of the above problem, and it is an object of the present invention to provide a portable swing-type communication device for games that can be conveniently used in a game mode as well as a phone mode.

It is another object of the present invention to provide a portable swing-type communication device for games that allows a convenient key-pushing operation in a game mode.

It is another object of the present invention to provide a portable swing-type communication device for games that allows a key-pushing operation to be conveniently performed using both hands of a user when the portable communication device is in a game mode.

It is another object of the present invention to provide a portable swing-type communication device for games that is provided with a display unit having various display sections that vary depending upon which mode the device is in.

It is yet another object of the present invention to provide a hinge apparatus that rotatably connects one housing of the portable swing-type communication device for games to the other housing while the housings are opposite each other.

In accordance with one aspect of the present invention, the above and other objects can be accomplished by the provision of a portable swing-type communication device for games. The communication device comprises a body housing having a display unit; a first key swing housing connected to the body housing such that the first key swing housing can be rotated about a first hinge axis while being opposite to the body housing for exposing/covering one side display section of the display unit; and a second key swing housing connected to the body housing such that the second key swing housing can be rotated about a second hinge axis while being opposite to the body housing for exposing/covering the other side display section of the display unit.

In accordance with another aspect of the present invention, there is provided a portable swing-type communication device for games. The communication device comprises a display unit; a body housing having a camera lens module mounted adjacent to one of lateral sides of the display unit; a first key swing housing connected to the body housing such that the first key swing housing can be rotated about a first hinge axis disposed adjacent to the other lateral side of the display unit while being opposite to the body housing for exposing/covering a display section of the display unit; and a second key swing housing connected to the body housing such that the second key swing housing can be rotated about a second hinge axis disposed adjacent to the other lateral side of the display unit while being opposite to the body housing for exposing/covering another display section of the display unit, the second key swing housing, wherein the second key swing housing swings apart from or toward the first key swing housing.

In accordance with yet another aspect of the present invention, there is provided a hinge apparatus, mounted in a portable communication terminal comprising a body housing and at least one swing housing rotatably connected to the body housing while being opposite to the body housing such that the body housing can be partially exposed/covered, for rotatably connecting the swing housing to the body housing, wherein the hinge apparatus comprises: a hinge base fixed in the body housing; and a hinge housing formed in the shape of a cylinder, extending in the longitudinal direction thereof, and fixed in the swing housing, the hinge housing having one end rotatably connected to the hinge base.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view of a portable swing-type communication device for games according to an embodiment of the present invention showing the device in a phone mode;
FIG. 2 is a front view of the portable swing-type communication device for games shown in FIG. 1;
FIG. 3 is a perspective view of the portable swing-type communication device for games according to an embodiment of the present invention showing the device in a game mode;
FIG. 4 is a front view of the portable swing-type communication device for games shown in FIG. 3;
FIG. 5 is a front view of the portable swing-type communication device for games according to an embodiment of the present invention showing the device in a message transmission mode;
FIG. 6 is an exploded perspective view illustrating a hinge apparatus of the portable swing-type communication device for games shown in FIG. 1;
FIG. 7 is an assembled perspective view illustrating the hinge apparatus shown in FIG. 6;
FIG. 8 is a perspective view illustrating the hinge apparatus of FIG. 6 mounted to the portable swing-type communication device for games according to an embodiment of the present invention;
FIG. 9 is a perspective view illustrating the operation of the portable swing-type communication device for games with the hinge apparatus of FIG. 6 mounted thereto;
FIG. 10 is a perspective view illustrating slit covers that cover guide slits of the portable swing-type communication device for games shown in FIG. 8; and
FIG. 11 is a perspective view illustrating distribution of flexible printed circuits of the portable swing-type communication device for games shown in FIG. 8.

### DETAILED DESCRIPTION OF THE PREFERRED EMBODIMENTS

Embodiments of the present invention will now be described in detail with reference to the accompanying drawings. In the following, a detailed description of known functions and configurations incorporated herein will be omitted when it may obscure the subject matter of the present invention.

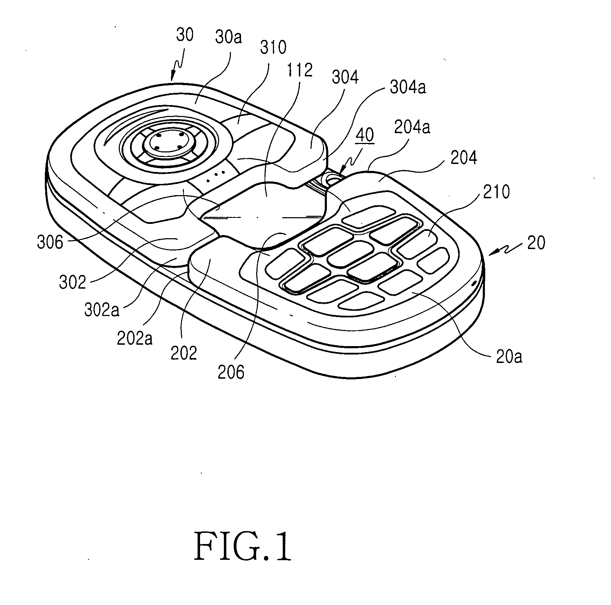

Referring to FIGS. 1 to 4, a portable swing-type communication device according to an embodiment of the present invention is a device that is convenient to use in a phone mode, a game mode, and a text transmission mode. Especially, a key-pushing operation is conveniently performed in the phone mode, the game mode, and the text transmission mode. Also, the portable swing-type communication device according to an embodiment of the present invention is provided with a display unit having various display sections varying depending upon which mode the portable swing-type communication device is in.

As shown in FIGS. 1 to 4, the portable swing-type communication device comprises a body housing 10 having a display unit; a first key swing housing 20 connected to the body housing 10 such that the first key swing housing 20 can be rotated about a first hinge axis A1 while being opposite the body housing 10 for exposing/covering a first display section 114 of the display unit; and a second key swing housing 30 connected to the body housing 10 such that the second key swing housing 30 can be rotated about a second hinge axis A2 while being opposite to the body housing 10 for exposing/covering a second display section 110 of the display unit.

The body housing 10 is provided at a predetermined position of one of the lateral sides with a camera lens module 40, which is rotatably mounted in the body housing 10. The first and second key swing housings 20 and 30 are rotated about the first and second hinge axes A1 and A2, respectively, such that the first and second key swing housings 20 and 30 can swing apart from or toward each other on an upper surface 10a of the body housing 10. The first and second key swing housings 20 and 30 are rotated less than 90 degrees, respectively.

The display unit further comprises a middle display section 112 disposed between the first and second display sections 114 and 110. At the body housing 10 around the display unit 110, 112 and 114, i.e., at one of lateral sides 111, an upper end 115, and a lower end 117 of the display unit, are formed a plurality of speaker openings 116. Specifically, the speaker openings 116 are disposed on the upper surface 10a of the body housing 10 excluding the display unit 110, 112 and 114 and the first and second hinge axes A1 and A2. Preferably, the speaker openings 116 have the same size, although the speaker openings 116 may have different sizes. The first and second hinge axes A1 and A2 are disposed adjacent to the other lateral side 113 of the display unit. The camera lens module 40 is disposed adjacent to the lateral side 111 of the display unit.

The first and second key swing housings 20 and 30 are disposed on the upper surface 10a of the body housing 10 while being symmetrically opposite to each other.

As described above, the display unit comprises: the middle display section 112, which is constantly exposed irrespective of whether the first and second key swing housings 20 and 30 are rotated; the first display section 114, which is exposed or covered depending upon whether the first key swing housing 20 is rotated; and the second display section 110, which is exposed or covered depending upon whether the second key swing housing 30 is rotated. Preferably, the display unit 110, 112 and 114 is a liquid crystal display unit. Alternatively, the display unit 110, 112 and 114 may be an information input display unit or an information output display unit. Also, the display unit 110, 112 and 114 may be a touch screen or a two- or three-dimensional holographic screen. The first and second display sections 110 and 114 are selectively exposed as the mode of the portable swing-type communication device is switched.

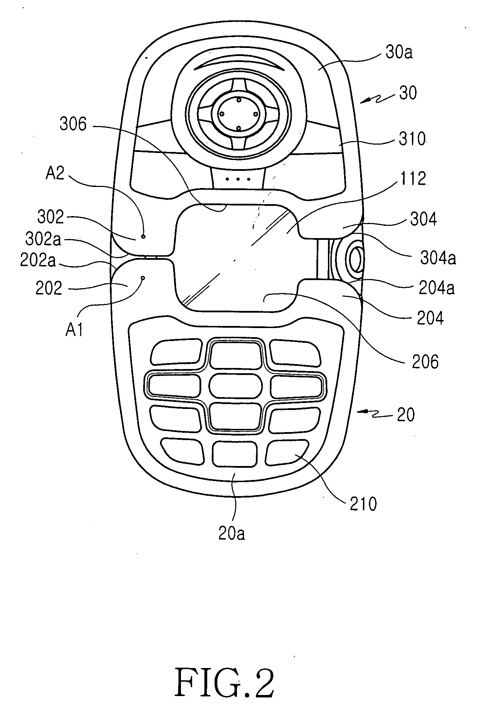

In the phone mode, information that a user frequently checks, for example, an icon indicating signal strength, an icon indicating remaining battery power, an icon indicating message arrival, date, time, and day are displayed on the middle display section 112, which is illustrated in FIGS. 1 and 2.

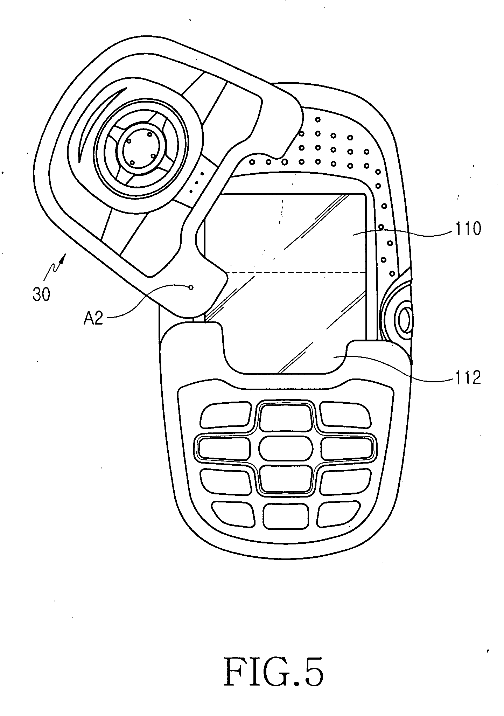

In the text transmission mode, input data is displayed on the middle display section 112 and the second display section 110, which is illustrated in FIG. 5.

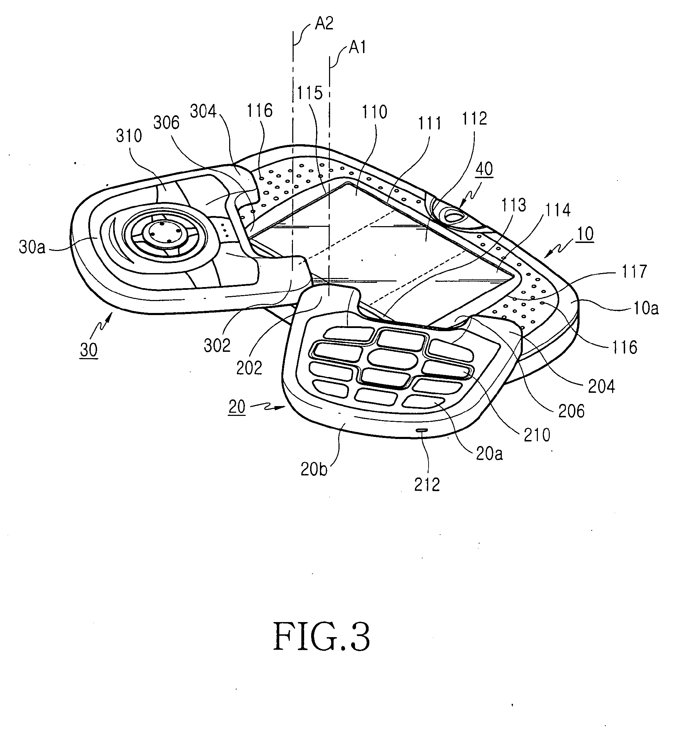

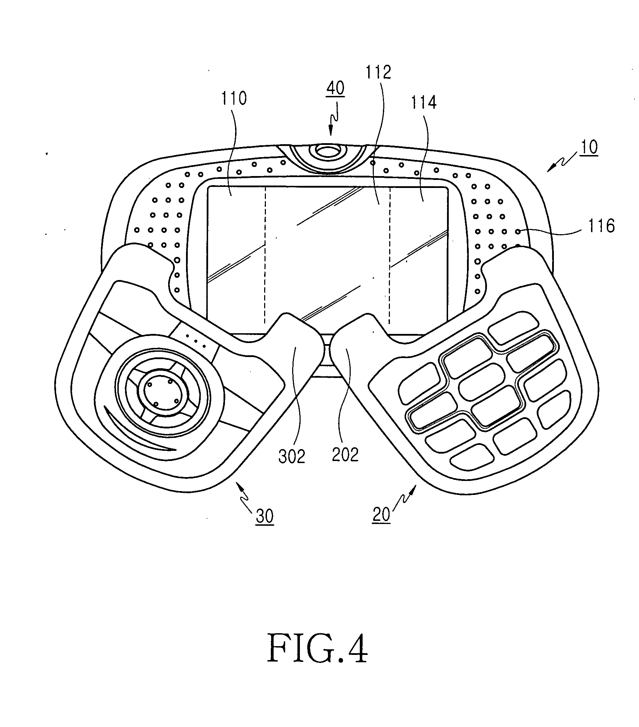

In the game mode, graphics for games are displayed on the middle display section 112 and the first and second display sections 110 and 114, which is illustrated in FIGS. 3 and 4.

The first key swing housing 20 includes a first opening 206 for constantly exposing the middle display section 112 of the display unit, and a pair of first protruded parts 202 and 204, which are disposed adjacent to the first opening 206 while being opposite to each other.

The first key swing housing 20 is provided at an upper surface 20a thereof with a first key array 210 comprising a plurality of keys. Specifically, the first key array 210 comprises numeral keys, character keys, and function keys. Also, the first key swing housing 20 is provided at a predetermined position of the lower end thereof with a microphone 212.

The second key swing housing 30 includes a second opening 306 for constantly exposing the middle display section 112 of the display unit, and a pair of second protruded parts 302 and 304, which are disposed adjacent to the second opening 306 while being opposite to each other.

The second key swing housing 30 is provided at an upper surface 30a thereof with a second key array 310 comprising a plurality of keys. Specifically, the second key array 310 comprises a communication key, menu keys, and a confirmation key.

Preferably, the first protruded parts 202 and 204 and the second protruded parts 302 and 304 extend toward each other while being symmetrical to each other, respectively. Also, the first protruded parts 202 and 204 have outer round edges 202a and 204a, respectively. Similarly, the second protruded parts 302 and 304 have outer round edges 302a and 304a, respectively. Consequently, interference between the first protruded parts 202 and 204 and the second protruded parts 302 and 304 is effectively prevented when the first and second key swing housing 20 and 30 are rotated.

When the first and second key swing housings 20 and 30 are maximally adjacent to each other, that is, completely rotated to the closed position with respect to the body housing 10, the first and second openings 206 and 306 communicate with each other with the result that the middle display section 112 of the display unit is constantly exposed and not obstructed.

The first and second hinge axes A1 and A2 are spaced apart from each other while being in parallel with each other. Specifically, the first hinge axis A1 is located adjacent to the middle display section 112 of the display unit, and the second hinge axis A2 is also located adjacent to the middle display section 112 of the display unit. The first hinge axes A1 and A2 are located adjacent to each other. Especially, the first and second hinge axes A1 and A2 are disposed on one side of the display unit, on the other side of which is disposed the camera lens module 40.

The first and second hinge axes A1 and A2 are located adjacent to the middle part of the lateral side 113 of the display unit, respectively. In addition, the first hinge axis A1 extends through one of the first protruded parts, i.e., the first protruded part 202, and the second hinge axis A2 extends through one of the second protruded parts, i.e., the second protruded part 302. Also, the first and second hinge axes A1 and A2 vertically extend from the upper surface 10a of the body housing 10, respectively.

The first and second hinge axes A1 and A2 are perpendicular to the hinge axis of the camera lens module 40, respectively.

The operation of the portable swing-type communication device for games with the above-stated construction according to an embodiment of the present invention will now be described in detail. FIGS. 1 and 2 show the portable swing-type communication device in the phone mode, and FIGS. 3 and 4 show the portable swing-type communication device in the game mode. As shown in FIGS. 3 and 4, the first and second key swing housings 20 and 30 are fully rotated about the first and second hinge axes A1 and A2, respectively, such that the key-pushing operation can be conveniently performed on the portable swing-type communication device with a user using both hands. FIG. 5 shows the portable swing-type communication device in the text transmission mode. As shown in FIG. 5, the second key swing housing 30 is rotated at predetermined degrees about the second hinge axis A2 such that the key-pushing operation can be conveniently performed on the portable swing-type communication device.

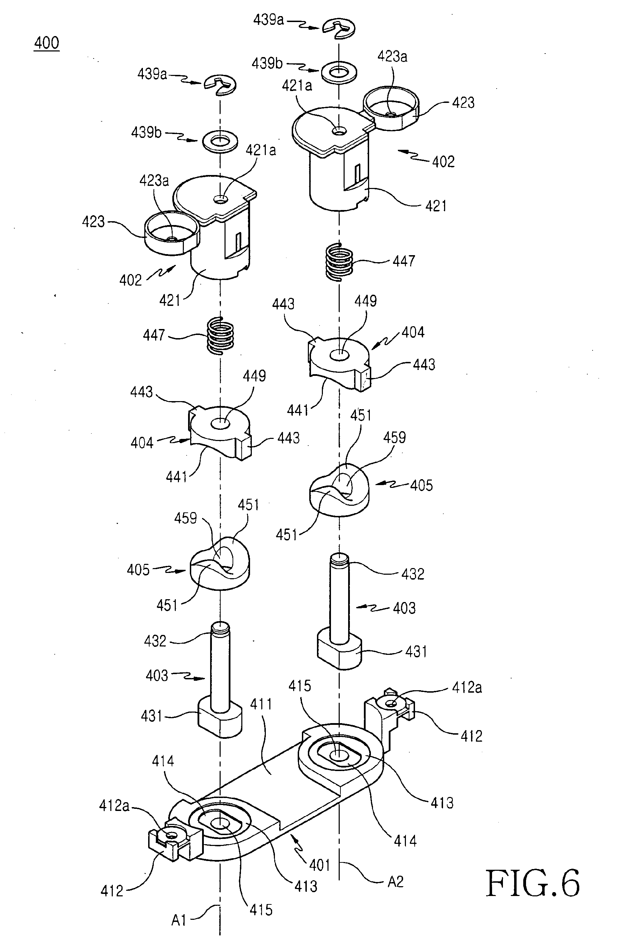

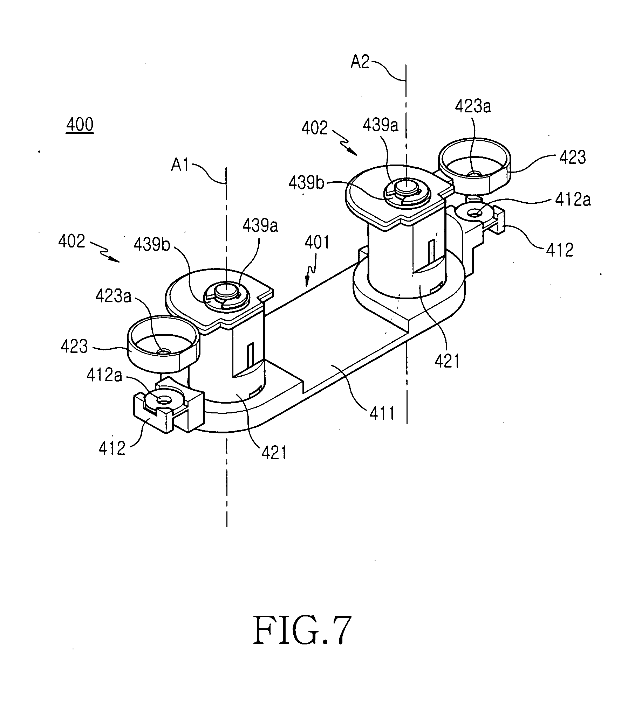

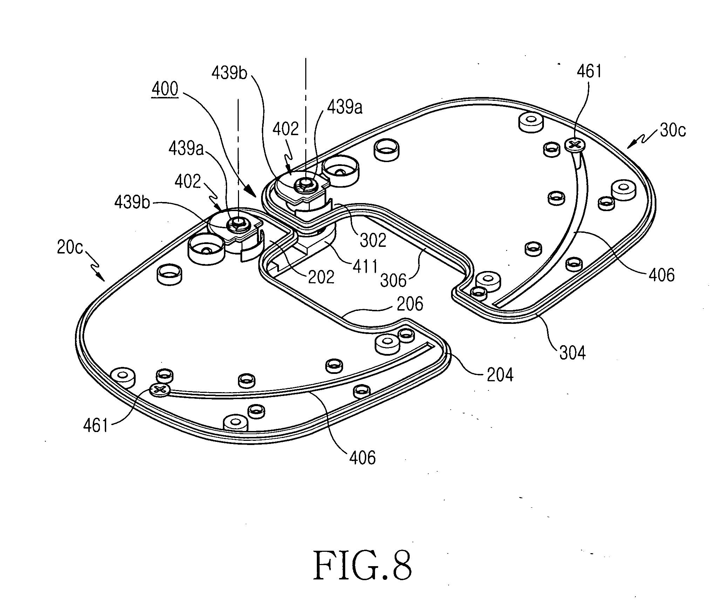

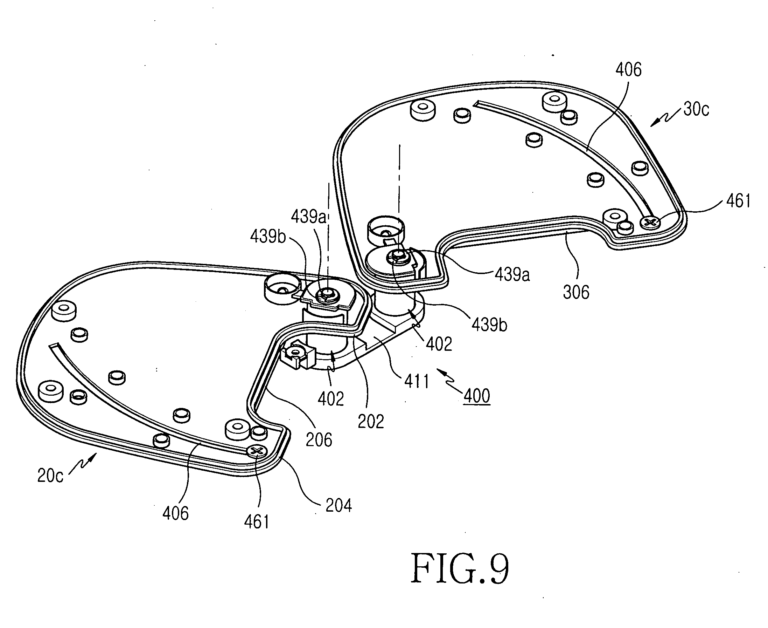

FIGS. 6 and 7 respectively show a hinge apparatus 400 that rotatably connects the first and second key swing housings 20 and 30 to the body housing 10, and FIGS. 8 to 11 respectively show the operation of the first and second key swing housings 20 and 30 connected to the body housing 10 by means of the hinge apparatus 400.

As shown in FIGS. 6 to 11, the hinge apparatus 400 comprises a hinge base 401, hinge housings 402, and supporting shafts 403. In each of the hinge housings 401 is accommodated a hinge cam 404, a hinge shaft 405, and a coil spring 447.

The hinge base 401 is securely fixed to the inner surface of the body housing 10. Specifically, the hinge base 401 is disposed adjacent to the middle region of the lateral side 113 of the display unit 110, 112, and 114. The hinge base 401 has a base plate 411, which is opposite to the inner surface of the body housing 10. The base plate 411 is provided at both ends of the upper surface thereof with rotating grooves 413, each of which is depressed a predetermined depth. Each of the rotating grooves 413 is formed as a fixing groove, which is depressed a predetermined depth from the bottom surface of the corresponding rotating groove 413. The supporting shafts 403 are securely fixed in the fixing grooves 414, respectively. The lower ends of the hinge housings 402 are rotatably located in the rotating grooves 413, respectively. The rotating grooves 413 are disposed on the first and second hinge axes A1 and A2, respectively. At both ends of the base plate 411 are integrally formed connection pieces 412, respectively. Each of the connection pieces 412 has a connection hole 412a formed therethrough in the longitudinal direction of the corresponding hinge housing 402. The hinge base 401 is securely fixed to the inner surface of the body housing 10 through engagement of screws (not shown) into the connection holes 412a.

Each of the hinge housings 402 comprises a cylindrical body 421 extending in the direction of the corresponding one of the first and second hinge axes A1 and A2, and a connection piece 423 integrally formed at a predetermined position of the outer circumference of the cylindrical body 421. The lower ends of the hinge housings 402 are rotatably located in the rotating grooves 413 of the hinge base 401. The hinge housings 402 are fixed to the first and second key swing housings 20 and 30, respectively. Each of the connection pieces 423 has a connection hole 423a formed therethrough in the longitudinal direction of the corresponding hinge housing 402 so that the hinge housings 402 can be fixed to the first and second key swing housings 20 and 30, respectively. The lower ends of the hinge housings 402 are fully open, and the upper ends of the hinge housings 402 are closed. At the upper closed ends of the hinge housings 402 are formed through-holes 421 a, respectively. The coil springs 447, the hinge cams 404, and the hinge shafts 405 are accommodated, in turn, in the hinge housings 402 through the lower open ends of the hinge housings 402, respectively.

Resilient forces from the coil springs 447 are applied to the hinge cams 404 such that the hinge cams 404 are pressed against the hinge shafts 405, respectively.

Each of the hinge cams 404 is provided at the opposite sides of the outer circumference thereof with sliding protrusions 443. Each of the hinge housings 402 is provided at the inner circumference thereof with sliding grooves (not shown) corresponding to the sliding protrusions 443, respectively. The sliding grooves extend in the longitudinal direction of the corresponding hinge housings 402. Consequently, the hinge cams 404 can be reciprocated in the hinge housings 402 and can also be rotated along with the hinge housings 402, respectively. Each of the hinge cams 404 is provided at the lower end thereof opposite to the corresponding hinge shaft 405 with a valley part 441.

The hinge shafts 405 are rotatably accommodated in the hinge housings 402 while being fitted on the supporting shafts 403, respectively. Consequently, the hinge shafts 405 are rotated in the hinge housings 402, respectively. Specifically, the hinge housings 402 are rotated relative to the hinge base 401 while the hinge shafts 405 are fixed to the supporting shafts 403, which are also fixed to the hinge base 410. Consequently, the hinge shafts 405 are rotated relative to the hinge housings 402, respectively, with the result that the hinge shafts 405 are rotated while tightly contacting the hinge cams 404, respectively.

Each of the hinge shafts 405 is provided at the upper end thereof opposite to the corresponding hinge cam 404 with a crest part 451. Consequently, the hinge cams 404 are rectilinearly moved in the hinge housings 402, respectively, as the hinge shafts 405 are rotated. The valley parts 441 of the hinge cams 404 are selectively engaged with the crest parts 451 of the hinge shafts 405, respectively. At this time, the hinge cams 404 are pressed against the hinge shafts 405 by means of the coil springs 447, and thus the valley parts 441 of the hinge cams 404 are engaged with the corresponding crest parts 451 of the hinge shafts 405 when the hinge shafts 405 are rotated.

Each of the supporting shafts 403 is provided at the lower end thereof with a fixing body 432 having a shape corresponding to that of each of the fixing grooves 414. Each of the supporting shafts 403 is also provided at the outer circumference of the upper end thereof with a connection groove 432. The upper ends of the supporting shafts 403 are inserted through the through-holes 421a formed at the upper closed ends of the hinge housings 402. In the connection grooves 432 of the upper ends of the supporting shafts 403 protruded from the hinge housings 402 through the through-holes 421a are fitted E-rings 439a, respectively. Between the E-rings 439a and the hinge housings 402 may be disposed washers 439b, respectively. As shown in FIG. 6, the supporting shafts 403 are securely connected to the fixing grooves 414 of the hinge base 401 through the engagement of screws (not shown) in connecting holes 415 formed at the fixing grooves 414, respectively, although the supporting shafts 403 may be integrally formed with the hinge base 401. It can be easily appreciated by those skilled in the art that the supporting shafts 403 can be integrally formed with the hinge base 401, since the supporting shafts 403 and the hinge shafts 405 are securely fixed on the hinge base 401.

Each of the hinge cams 404 has a through-hole 449, through which the corresponding supporting shaft 403 is inserted, and each of the hinge shafts 405 has a through-hole 459, through which the corresponding supporting shaft 403 is also inserted. Consequently, the supporting shafts 430 are inserted through the hinge housings 402 and are then protruded from the hinge housings 402 through the through-holes 421 a, respectively.

FIGS. 8 to 11 show the hinge apparatus 400 mounted to the portable swing-type communication device. It should be noted that assembly of the hinge apparatus 400 to the portable swing-type communication device will be described below with reference to FIGS. 8 to 11 while the body housing 10 of the portable swing-type communication device is not shown in the drawings.

The hinge base 401 is attached to the inner surface of the body housing 10 of the portable swing-type communication device. The hinge housings 402 are attached to the inner surfaces of the first and second protruded parts 202 and 302 of the first and second key swing housings 20 and 30, respectively. The hinge housings 402 extend downward from the first and second key swing housings 20 and 30, respectively, and are then rotatably connected to the hinge base 401 attached to the inner surface of the body housing 10.

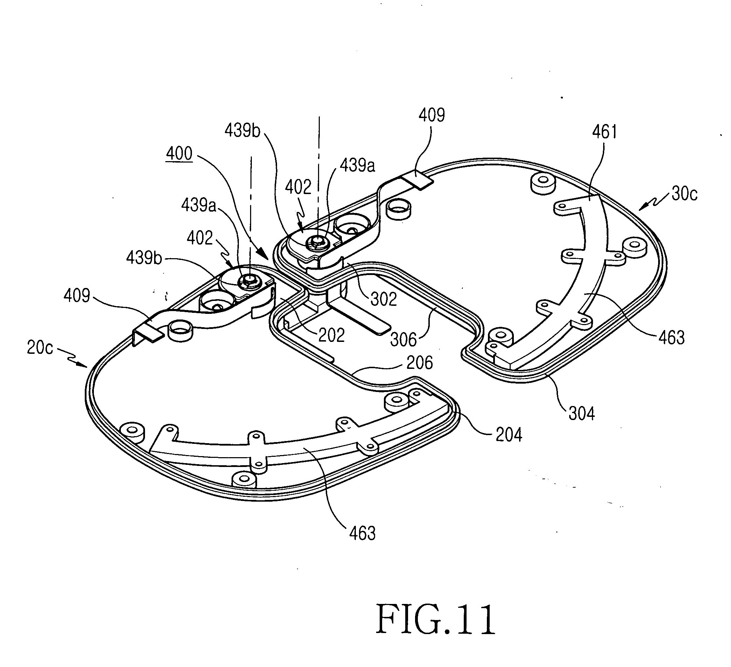

At this time, the inner circumferences of the hinge holes formed at the first and second key swing housings 20 and 30, through which the hinge housings 402 are inserted, respectively, are spaced apart from the outer circumferences of the hinge housings 402, respectively, such that flexible printed circuits 409 (Refer to FIG. 11) to connect circuit devices mounted in the body housing 10 and the first and second key swing housings 20 and 30 are disposed therebetween. Similarly, the inner circumferences of the hinge holes formed at the body housing 10, through which the hinge housings 402 are inserted, respectively, are also spaced apart from the outer circumferences of the hinge housings 402, respectively.

The first and second key swing housings 20 and 30 connected to the body housing 10 by means of the hinge apparatus 400 are placed on the body housing 10 while the first and second key swing housings 20 and 30 are fully opposite to the body housing 10 or rotated to predetermined positions thereof through the cooperation of the hinge cams 404 and the hinge shafts 405 accommodated in the hinge housings 402, respectively.

At lower cases 20c and 30c of the first and second key swing housings 20 and 30 are formed guide slits 406, respectively, and at the body housing 10 are formed guide protrusions 461. The guide protrusions 461 are disposed in the guide slits 406, respectively, which guarantees stability of rotation of the first and second key swing housings 20 and 30. The guide slits 406 are spaced a predetermined distance from the hinge housings 403 attached to the first and second key swing housings 20 and 30, and preferably extend in a curved line. As the first and second key swing housings 20 and 30 are rotated, the guide protrusions 461 are slid along the guide slits 406, respectively.

Specifically, the guide slits 406 extend from the first and second protruded parts 204 and 304 along the edges of the first and second key swing housings 20 and 30 in the circumferential directions of imaginary circles drawn about the hinge housings 402 attached to the first and second key swing housings 20 and 30. Preferably, the angular distance of each of the guide slits 406 is limited to less than 90 degrees. The range of rotation of the first and second key swing housings 20 and 30 is limited by the guide slits 406 and the guide protrusions 461.

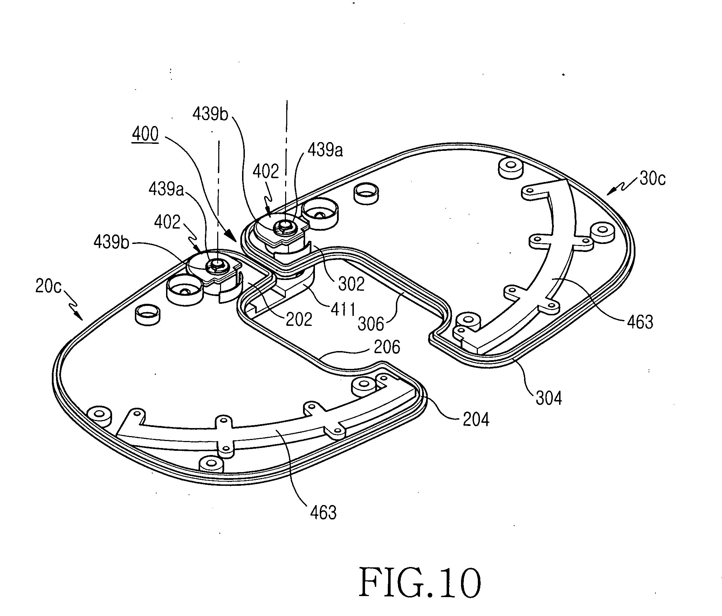

When the first and second key swing housings 20 and 30 are fully rotated from the body housing 10, the guide slits 406 formed at the bottom surface of the first and second key swing housings 20 and 30 are exposed. As a result, the insides of the first and second key swing housings 20 and 30 are also exposed through the guide slits 406. To this end, the guide slits are covered by means of slit covers 463 (Refer to FIG. 10), by which foreign matter is prevented from being introduced into the first and second key swing housings 20 and 30.

The guide protrusions 461 are disposed adjacent to both ends of the body housing 10, respectively. When the first and second key swing housings 20 and 30 are fully placed on the body housing 10, the guide protrusions 461 are located at the ends of the first and second key swing housings 20 and 30, respectively. When the first and second key swing housings 20 and 30 are fully rotated from the body housing 10 such that the key-pushing operation can be easily performed with both hands, the guide protrusions 461 are located at the first and second protruded parts 204 and 304 of the first and second key swing housings 20 and 30, respectively.

The rotary force of the hinge apparatus 400 is applied to the first and second key swing housings 20 and 30 such that the first and second key swing housings 20 and 30 are fully placed on the body housing 10 or the first and second key swing housings 20 and 30 are placed away from the body housing 10 depending upon to what degree the first and second key swing housings 20 and 30 are rotated from the body housing 10.

When the first and second key swing housings 20 and 30 are fully placed on the body housing 10, the rotary force of the hinge apparatus 400 is still applied to the first and second key swing housings 20 and 30, and the guide protrusions 461 contact one ends of the guide slits 406, respectively. Consequently, it is maintained that the first and second key swing housings 20 and 30 are fully placed on the body housing 10. When the first and second key swing housings 20 and 30 are fully rotated from the body housing 10, on the other hand, the rotary force of the hinge apparatus 400 is still applied to the first and second key swing housings 20 and 30, and the guide protrusions 461 contact the other ends of the guide slits 406, respectively. Consequently, it is maintained that the first and second key swing housings 20 and 30 are fully rotated from the body housing 10.

As apparent from the above description, the present invention provides a portable swing-type communication device comprising a body housing and two key swing housings rotatably attached to the body housing while the key swing housings are opposite to the body housing such that the key swing housings are rotated apart from or toward each other, whereby a key-pushing operation is conveniently performed and optimum display sections are provided in any one of modes, i.e., a phone mode, a game mode, or a text transmission mode. Consequently, the portable swing-type communication device of the present invention is very convenient to use.

Although certain embodiment of the present invention have been disclosed for illustrative purposes, those skilled in the art will appreciate that various modifications, additions and substitutions are possible, without departing from the scope and spirit of the invention as disclosed in the accompanying claims.

## Claims

1. A portable swing-type communication device for games, comprising:
a body housing having a display unit;
a first key swing housing connected to the body housing such that the first key swing housing can be rotated about a first hinge axis while being opposite to the body housing for exposing/covering one side display section of the display unit; and
a second key swing housing connected to the body housing such that the second key swing housing can be rotated about a second hinge axis while being opposite to the body housing for exposing/covering the other side display section of the display unit.

2. The device as set forth in claim 1, wherein the first and second key swing housings are disposed on an upper surface of the body housing while being symmetrically opposite to each other such that the first and second key swing housings can swing apart from or toward each other.

3. The device as set forth in claim 1, wherein the display unit comprises:
a middle display section constantly exposed irrespective of whether the first and second key swing housings are rotated;
a first display section exposable or coverable depending upon whether the first key swing housing is rotated; and
a second display section exposable or coverable depending upon whether the second key swing housing is rotated.

4. The device as set forth in claim 1, wherein the first and second hinge axes are spaced apart from each other while being in parallel with each other.

5. The device as set forth in claim 1, wherein the first key swing housing comprises:
a first opening for constantly exposing one side display section of the display unit; and
a pair of first protruded parts disposed at both sides of the first opening while being opposite to each other.

6. The device as set forth in claim 1, wherein the second key swing housing comprises:
a second opening for constantly exposing the other side display section of the display unit; and
a pair of second protruded parts disposed at both sides of the second opening while being opposite to each other.

7. The device as set forth in claim 1, wherein the first hinge axis is located adjacent to a middle display section of the display unit, and the second hinge axis also is located adjacent to the middle display section of the display unit, the first and second hinge axes being located adjacent to each other.

8. The device as set forth in claim 1, further comprising:
a plurality of speaker openings formed at the body housing around the display unit.

9. The device as set forth in claim 1, wherein the first key swing housing is provided at an upper surface thereof with a first key array comprising a plurality of keys, the first key swing housing is provided at a predetermined position of the lower end thereof with a microphone, and the second key swing housing is provided at an upper surface thereof with a second key array comprising a plurality of keys.

10. A portable swing-type communication device for games, comprising:
a body housing having a display unit and a camera lens module mounted adjacent to one of lateral sides of the display unit;
a first key swing housing connected to the body housing such that the first key swing housing can be rotated about a first hinge axis disposed adjacent to the other lateral side of the display unit while being opposite to the body housing for exposing/covering a display section of the display unit; and
a second key swing housing connected to the body housing such that the second key swing housing can be rotated about a second hinge axis disposed adjacent to the other lateral side of the display unit while being opposite to the body housing for exposing/covering another display section of the display unit, the second key swing housing, wherein the second key swing housing swings apart from or toward the first key swing housing.

11. The device as set forth in claim 10, wherein the first hinge axes are disposed opposite to the camera lens module from the display unit.

12. The device as set forth in claim 10, wherein the camera lens module is rotatable.

13. The device as set forth in claim 10, wherein the first key swing housing comprises a first opening for constantly exposing a middle display section of the display unit, and the second key swing housing comprises a second opening for constantly exposing the middle display section of the display unit.

14. The device as set forth in claim 13, wherein the first key swing housing further comprises first protruded parts disposed at both sides of the first opening while being opposite to each other, and the second key swing housing further comprises second protruded parts disposed at both sides of the second opening while being opposite to each other, the first and second protruded parts extending toward each other while being symmetrical to each other, respectively.

15. The device as set forth in claim 14, wherein the first and second protruded parts have outer round edges, respectively.

16. The device as set forth in claim 13, wherein the first and second openings communicate with each other when the first and second key swing housings are maximally adjacent to each other.

17. The device as set forth in claim 10, wherein the first and second hinge axes are located adjacent to the middle part of the other lateral side of the display unit, respectively.

18. The device as set forth in claim 10, wherein the first and second hinge axes are perpendicular to a hinge axis of the camera lens module, respectively.

19. The device as set forth in claim 10, wherein the first and second key swing housings are rotated less than 90 degrees, respectively.

20. A hinge apparatus, mounted in a portable communication terminal comprising a body housing and at least one swing housing rotatably connected to the body housing while being opposite to the body housing such that the body housing can be partially exposed/covered, for rotatably connecting the swing housing to the body housing, wherein the hinge apparatus comprises:
a hinge base fixed in the body housing; and
a hinge housing formed in the shape of a cylinder, extending in the longitudinal direction thereof, and fixed in the swing housing, the hinge housing having one end rotatably connected to the hinge base.

21. The apparatus as set forth in claim 20, further comprising:
a supporting shaft having one end attached to the hinge base and the other end protruded outward through the other end of the hinge housing; and
an E-ring fitted on the other end of the supporting shaft while being disposed at the other end of the hinge housing.

22. The apparatus as set forth in claim 21, further comprising:
a fixing groove formed at a surface of the hinge base, the fixing groove having a predetermined depth; and
a fixing body formed at one end of the supporting shaft, the fixing body having a shape corresponding to that of the fixing groove.

23. The apparatus as set forth in claim 20, wherein the hinge base is provided at a surface thereof with a rotating groove having a predetermined depth, one end of the hinge housing being rotatably disposed in the rotating groove.

24. The apparatus as set forth in claim 20, further comprising:
connection pieces extending from both ends of the hinge base, wherein each of the connection pieces has a connection hole formed therethrough in the longitudinal direction of the hinge housing such that the connection pieces are connected to an inner surface of the body housing.

25. The apparatus as set forth in claim 20, further comprising:
a hinge cam accommodated in the hinge housing such that the hinge cam can be rectilinearly moved in the hinge housing;
a hinge shaft rotatably accommodated in the hinge housing while being opposite to the hinge cam; and
a coil spring accommodated in the hinge housing for applying a resilient force to the hinge cam such that the hinge cam is pressed against the hinge shaft.

26. The apparatus as set forth in claim 25, further comprising:
a valley part formed at one end of the hinge cam; and
a crest part formed at one end of the hinge shaft, the crest part being selectively engaged with the valley part as the hinge housing is rotated.

27. The apparatus as set forth in claim 20, further comprising:
a connection piece formed at a predetermined position of the outer circumference of the hinge housing, wherein the connection piece has a connection hole formed therethrough in the longitudinal direction of the hinge housing such that the connection piece is connected to an inner surface of the swing housing.

28. The apparatus as set forth in claim 20, further comprising:
a guide slit formed at a bottom surface of the swing housing, the guide slit extending in the circumferential direction of an imaginary circle drawn about the hinge housing while being uniformly spaced apart from the hinge housing attached to the swing housing; and
a guide protrusion formed at the body housing, the guide protrusion being guided along the guide slit, wherein the range of rotation of the swing housing is limited by the guide slit and the guide protrusion.

29. The apparatus as set forth in claim 28, wherein the angular distance of the guide slit is limited to less than 90 degrees.

30. The apparatus as set forth in claim 28, further comprising:
a slit cover attached to the inner surface of the swing housing for covering the guide slit.

31. The apparatus as set forth in claim 28, wherein the swing housing is provided at both sides thereof with a pair of protruded parts extending in parallel with each other while being spaced apart from each other, and the hinge housing is fitted to one of the protruded parts.

32. The apparatus as set forth in claim 31, wherein the hinge housing is inserted through a hinge hole formed at one of the protruded parts, and the inner circumference of the hinge hole is spaced apart from the outer circumference of the hinge housing such that a flexible printed circuit can be disposed therebetween.

33. The apparatus as set forth in claim 31, wherein the guide slit extends from the other protruded part along the edge of the swing housing.

34. The apparatus as set forth in claim 20, wherein' a pair of hinge housings is connected to the hinge base.
